Europäisches Patentamt

European Patent Office

Office européen des brevets

(19)

(11) Publication number: **0 327 746**
**A1**

## (12) EUROPEAN PATENT APPLICATION

(21) Application number: 88301209.8

(51) Int. Cl.4: **C08F 4/02**

(22) Date of filing: **12.02.88**

(43) Date of publication of application:
**16.08.89 Bulletin 89/33**

(84) Designated Contracting States:
**AT BE CH DE ES FR GB GR IT LI LU NL SE**

(71) Applicant: **NESTE OY**
**Keilaniemi**
**SF-02150 Espoo 15(FI)**

(72) Inventor: **Stjernberg, Mari**
**Ilomaentie 9 A 16**
**SF-00840 Helsinki(FI)**
Inventor: **Osterholm, Jan-Erik**
**Kurjentie 5 E**
**SF-06100 Porvoo(FI)**

(74) Representative: **Lamb, John Baxter et al**
**MARKS & CLERK 57/60 Lincoln's Inn Fields**
**London WC2A 3LS(GB)**

(54) Catalyst system consisting of a carrier substance and an active catalyst.

(57) A catalyst system for use in coordination polymerization, consisting of a carrier substance and an active catalyst, comprises poly(p-phenylene) as the carrier substance which is treated with magnesium chloride and thereafter activated with $TiCl_4$ and with an Al alkyl to give the catalyst system.

EP 0 327 746 A1

## Catalyst system consisting of a carrier substance and an active catalyst

The present invention concerns a catalyst system useful in coordination polymerizations, consisting of a carrier substance and an active catalyst, said carrier substance having been treated with magnesium chloride, whereafter the system has been activated with titanium tetrachloride and an aluminium alkyl.

The invention furthermore concerns a procedure for manufacturing a catalyst system consisting of a carrier substance and an active catalyst for use in coordination polymerization. In said procedure the carrier substance is treated with an $MgCl_2$ alcohol solution, whereafter the alcohol is evaporated. Prior to polymerization $TiCl_4$ and an Al-alkyl is added to the system.

Heretofore, mainly various metal oxides have been used as catalyst carrier. Their drawback has been toxicity and a critical operating range. The whole catalyst system has been worked out expressively for a given carrier, which then as a rule fails to operate in other systems.

The operating range of inert hydrocarbon carriers is known to be less critical, and therefore an active search for them has come under way. They have good properties even otherwise. The isotactic properties of the synthesized polymer are generally good, and the ash content is low.

In GB patent No. 2,028,347 a catalyst system is used, as one alternative, in which the carrier consists of styrene-divinyl benzene. The carrier is impregnated with a $MgCl_2$ solution. As solvent, alcohol is used, preferably ethyl or methyl alcohol, which is evaporated in order to obtain the final carrier. Activation of the catalyst composition is performed by a $TiCl_4$ treatment. The compounds employed as catalyst activators may be for instance, metal alkyls.

We have now found a new compound which is usable as carrier in catalyst systems of the kind specified above.

The catalyst system of the invention consisting of a carrier substance and and active catalyst is mainly characterized in that the active catalyst is formed on the surface/in the pores of a carrier consisting of poly-(p-phenylene).

The procedure of the invention for manufacturing a catalyst system composed of a carrier substance and an active catalyst is mainly characterized in that the carrier used is poly(p-phenylene), the active catalyst being formed on its surface/in its pores.

As mentioned above, hydrocarbon carriers have good properties as a rule. Poly(p-phenylene) has not been used as a catalyst carrier heretofore. However, its porosity is appropriate and its activity is fully comparable with any catalysts of prior art. The use of poly(p-phenylene) affords the further advantage that it becomes possible to manage with much smaller titanium quantities than before, if required. The ash content of the polymer is low when PPP is used.

PPP powder has been produced by the so-called Kovacik procedure, by oxidative cationic polymerization of benzene (p. Kovacik and J. Oziomek, J.Org.Chem., 29 (1964) 100).

A three-necked flask is used as polymerization reactor, with attached inert gas (argon) source, mixer and cooler. The reactor is warmed up and carefully flushed with argon, to remove oxygen and moisture. Into the reactor are added 118.6 ml (1.33 mol) thiophenefree benzene and 44.5 g (0.33 mol) water-free, dry aluminium chloride, $AlCl_3$. The benzene/$AlCl_3$ suspension is mixed, and 22.4 g (0.17 mol) anhydrous copper chloride $CuCl_2$ is added. The temperature of the reactor is kept at 30-32° C. Polymerizing time is 2 hrs. On polymerizing, the viscous reaction product is poured into cold, 18% HCl solution. The crude polymer is filtered out, whereafter it is washed with boiling 18% HCl solution until the washing solution remains colourless. This is followed by washing with boiling water until the $AgNO_3$ test yields a negative result for chlorine. The polymer powder is dried in dynamic vacuum at 150° C, for 24 hrs.

For manufacturing the catalyst system, the pure, finely divided PPP powder was treated with an $MgCl_2$-ethanol solution and ethanol was thereafter evaporated. $TiCl_4$ was then added. At this stage, DMS (dimethoxydiphenylsilane) was also added. Al-alkyl was added before polymerization, whereby the active catalyst was formed on the surface/in the pores of the PPP carrier.

The catalyst was used in manufacturing polybutylene, polypropylene and polyethylene.

We present in the following some examples, in which the catalyst system of the invention is compared with previously known catalysts, in polymerization of olefines. The polymer yields reflect the good activity of the catalyst.

EXAMPLES

A number of catalysts according to the invention were prepared, as well as comparison catalysts, for the polymerization examples.

MgCl₂ and EtOH were heated in a flask until the MgCl₂ was dissolved. The dry PPP powder was added to the melt heating (90°C) for one hour. Nitrogen gas was passed through (at 90°C) until the powder appeared dry. A TiCl₄ heptane mixture (1:1) was added; heating at 90 C, whereupon followed swift washings (twice) with heptane. The catalyst was dried in a nitrogen flow.

In some instances DIBP (diisobutylphthalate) was added to the catalyst during preparation.

The parameters employed in the preparation of the different catalysts are shown in Table 1.

## Polymerizations

Polymerization runs were carried out with the catalyst prepared as described above, and the activities of the catalysts of the invention were compared with the activity of catalysts consistent with the state of art.

Polymerization of butylene: 1-butylene was polymerized at 4.4 bar, in an isobutylene suspension. The partial pressure of water was 0.1 bar. Reaction temperature was 28°C and reaction time, 3 hrs. The aluminium alkyl used in the experiment was triisobutylaluminium (Al:Ti = 200), and diphenyldimethoxysilane (DMS) served as donor (Al: Donor = 20). The catalyst employed was catalyst D (see Table 1), and activity was 0.09 kg polymer per g of cat.

Polymerization of propylene: The propylene polymerization runs using the catalyst according to the invention were performed in heptane suspension, as follows:

Into a polymerization reactor, containing 700 ml dry heptane, was added a catalyst which was prepared by mixing an aluminium alkyl compound, triethylaluminium and a Lewis alkali, diphenyldimethoxysilane (DMS), the Al: donor-proportion being 20 in 50 ml heptane. After five minutes the catalyst component, which had been prepared in the manner described above was added so that the Al:Ti molar ratio was 200. Polymerization was carried out under the following conditions: propylene partial pressure 9.0 bar, hydrogen partial pressure 0.3 bar, temperature 70°C, and polymerization time 3 hrs.

Polymerization of ethylene: Into a 2-litre polymerization reactor was added 1 litre heptane, and heated to 80°C. To 100 ml heptane was added 6.6. ml of Et₃Al. Half of the heptane solution was added into the reactor, the catalyst was mixed to the other half and this was subsequently added into the reactor. The Al:Ti molar ratio became 50. The partial pressure of hydrogen was adjusted to 3 bar, and ethylene was continuously introduced so that the total pressure became 10 bar. Polymerization temperature was 90°C and polymerization time, 1 hour.

The parameters employed in the different polymerization runs, and the results, are shown in Table 2.

The results reveal that the activity of the catalyst of the invention is fully comparable with the activity of catalysts conforming to the state of art.

## Results of analysis of catalyst and completed polymer

The elemental analysis of the catalyst is seen in Table 1 and that of the polymer, in Table 2.

The conductivities of the catalyst are seen in Table 1 and the result of analysis of the polymer in Table 2.

TABLE 1

| PREPARATION AND ANALYSIS OF CATALYST | | | | | | | | | | | | | |
|---|---|---|---|---|---|---|---|---|---|---|---|---|---|
| Designation | $MgCl_2$, g | EtOH, g | Reaction | | PPP, g | Reaction | | $TiCl_4$ Hept. 1:1 ml | Reaction | | Catalyst, elemental % | | | Conductivity ( ), $8cm^{-1}$ |
| | | | Time, min. | Temp., $^{\circ}C$ | | Time, min. | Temp., $^{\circ}C$ | | Time, min. | Temp., $^{\circ}C$ | Mg | Ti | Cl | |
| A | 0,75 | 3 | 90 | 90 | 1 | 60 | 90 | 3,4 | 120 | 90 | 3 | 11 | 34 | |
| B | 0,75 | 3 | 90 | 90 | 1 | 90 | 90 | 3,4 | 120 | 90 | 8 | 5 | 32 | $4,7 \times 10^{-10}$ |
| C | 0,75 | 3 | 90 | 90 | 1 | 90 | 90 | 3,4 | 60 | 90 | 6 | 11 | 33 | $4,1 \times 10^{-10}$ |
| D | 0,75 | 3 | 90 | 90 | 1 | 120 | 90 | 28,0 | 120 | 90 | 9,5 | 5 | 37 | $8,7 \times 10^{-8}$ |
| E | 0,75 | 3 | 60 | 90 | - | - | - | 3,4 | 120 | 90 | 17,0 | 8,4 | 60 | $2,4 \times 10^{-11}$ |
| F | 0,75 | 3 | 60 | 90 | - | - | - | 28,0 | 120 | 90 | 18,3 | 7,2 | 65 | $3,7 \times 10^{-11}$ |
| G | 0,75 | 3 | 60 | 90 | 1 | 120 | 90 | 28,0 | 120 | 30 | 9,3 | 4,4 | 33 | $1,4 \times 10^{-8}$ |
| H | 0,12 | 0,5 | 60 | 90 | 0,35 | 60 | 90 | 0,53 | 130 | 90 | 4,2 | 8,9 | 35 | $9,2 \times 10^{-3}$ |

[1]) No PPP carrier substance used = Reference example.

[2]) 0.3 ml DIBP (= diisobutylphthalate) added 15 min. after $TiCl_4$ addition.

TABLE 2

| Catalyst | Catalyst quantity, g | Yield, g | Activity, kg polym. per g cat. | Evap.% | Isotacticity % | BD, g/dl | Ash in the polymer, % | Monomer |
|---|---|---|---|---|---|---|---|---|
| A | 70,4 | 65,2 | 0,9 | 21 | 81,2 | 33 | 0,66 | Propylene |
| B | 58,3 | 65,6 | 1,1 | 23 | 86,5 | 33 | 0,12 | Propylene |
| C | 58,7 | 39,2 | 0,7 | 22 | | 28 | 0,25 | Propylene |
| D | 54,0 | 178,4 | 3,3 | 13 | 89,0 | 24 | 0,145 | Propylene |
| E | 55,9 | 215,2 | 3,8 | 10,6 | 88,5 | 21 | 0,14 | Propylene |
| F | 55,7 | 178,0 | 3,2 | 13,8 | 90,5 | 23 | 0,15 | Propylene |
| G | 53,8 | 97,6 | 1,8 | 8,3 | 93,0 | 26 | 0,21 | Propylene |
| H | 60,7 | 30,7 | 0,5 | | | | | Propylene |
| A** | 50,7 | 107,3 | 2,1 | | | 27 | 0,1 | Ethylene |
| B | 53,4 | 113,9 | 2,1 | | | 26 | 0,054 | Ethylene |
| D | 56,7 | 269,7 | 4,8 | | | 28 | 0,034 | Ethylene |

* I isotactivity index: the polymer is extracted in a Soxhlet, 6 hrs in boiling heptane.

** : Elemental analysis of the polymer (ppm):
Mg:31, Ti:65, Cl:102, Al:314
I % = Dissolved part x 100 / Total polymer
Bulk density = Weight of 1 di of the polymer.

## Claims

1. A catalyst system for use in coordination polymerization, comprising a carrier substance and an active catalyst, the carrier substance having been treated with magnesium chloride and the system thereafter activated with TiCl₄ and with an Al alkyl, characterized in that the active catalyst is formed on the surface and/or in the pores of a carrier substance comprising poly(p-phenylene).

2. A catalyst system according to claim 1, characterized in that it comprises about 1 g of poly(p-phenylene) per 0.75 g of $MgCl_2$.

3. A process for preparing a catalyst system comprises a carrier substance and an active catalyst for use in coordination polymerization by the stages of treating the carrier substance with a $MgCl_4$-alcohol solution, evaporating off the alcohol and subsequently adding to the system TiCl and, before polymerization, an Al alkyl, characterized in that poly(p-phenylene) is used as the carrier substance on the surface and/or in the pores of which the active catalyst is formed.

4. A process according to claim 3, characterized in that a donor, such as diisobutylphthalate, is added to the catalyst system.

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CHEMICAL ABSTRACTS, vol. 91, 1979, page 598, no. 19872m, Columbus, Ohio, US; & SU-A-657 839 (INSTITUTE OF HETEROORGANIC COMPOUNDS, ACADEMY OF SCIENCES, U.S.S.R) 25-04-1979 * Abstract * | 1 | C 08 F 4/02 |
| Y | US-A-4 021 599 (R.K. KOCHHAR et al.) * Claims; column 3, paragraph 1 * | 1 | |
| D,A | GB-A-2 028 347 (EUTECO) * Claims * | 1 | |

TECHNICAL FIELDS SEARCHED (Int. Cl.4)

C 08 F

The present search report has been drawn up for all claims

| Place of search | Date of completion of the search | Examiner |
|---|---|---|
| THE HAGUE | 21-09-1988 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)